# EUROPEAN PATENT SPECIFICATION

(11) **EP 0 526 211 B1**
(45) Date of publication and mention of the grant of the patent: **16.12.1998**
(21) Application number: 92306965.2
(22) Date of filing: 30.07.1992
(51) Int. Cl.: G06F 15/02

(54) **A data communication unit**
Datenübertragungseinheit
Unité de communication de données

(30) Priority: 02.08.1991 JP 193792/91; 10.01.1992 JP 2843/92; 31.01.1992 JP 15862/92
(43) Date of publication of application: 03.02.1993
(73) Proprietor: FUJITSU LIMITED, Kawasaki-shi, Kanagawa 211 (JP)
(72) Inventor: Yamamoto, Shinji, c/o Fujitsu Limited, Kawasaki-shi, Kanagawa 211 (JP); Tayama, Hideyuki, c/o Fujitsu Limited, Kawasaki-shi, Kanagawa 211 (JP); Yamaguchi, Shuji, c/o Fujitsu Limited, Kawasaki-shi, Kanagawa 211 (JP)
(74) Representative: Fane, Christopher Robin King

(56) References cited:
- EP-A- 0 161 798
- GB-A- 2 170 066
- PATENT ABSTRACTS OF JAPAN vol. 13, no. 2 (E-700)6 January 1989 & JP-A-63 214 038 ( MATSUSHITA ELECTRIC ) 6 September 1988
- PATENT ABSTRACTS OF JAPAN vol. 9, no. 23 (E-293)30 January 1985 & JP-A-59 168 747 ( CANON ) 22 September 1984

## Description

The present invention relates to a data transmission unit such as a communication interface unit for a hand-held computer, and more particularly to a communication interface unit that is capable of being directly coupled with an adjacent communication interface unit.

In recent years, for canvassing, stock management, etc. and distribution industries, movable terminals such as hand-held computers (hereinafter referred to as HHCs) have become popular. When data input to an HHC and stored therein is to be transmitted to a host computer and so forth, it is transmitted through a data transmission unit such as a communication interface unit (hereinafter referred to as CIU) that is a transmitting adapter. In business offices, for example, there are usually a number of CIUs. A number of HHCs are respectively coupled to the CIUs, and from the CIUs, the data are transmitted to the host computer.

Conventionally, each of the CIUs and the host computer are connected by a data cable. Therefore, a space for the data cable is required for each CIU. When there are a number of CIUs, conventionally there are a number of cables between the CIUs and the host computer, and these require space. In addition, if the host computer has only a single connector for connecting the cable to a CIU, each cable must be substituted by another cable when another CIU is to be connected to the host computer, which is an inconvenient operation. When a plurality of CIUs are connected in series, as in another conventional system, each pair of adjacent CIUs are connected by a data cable, and so space for the data cable between adjacent CIUs is also required in this case.

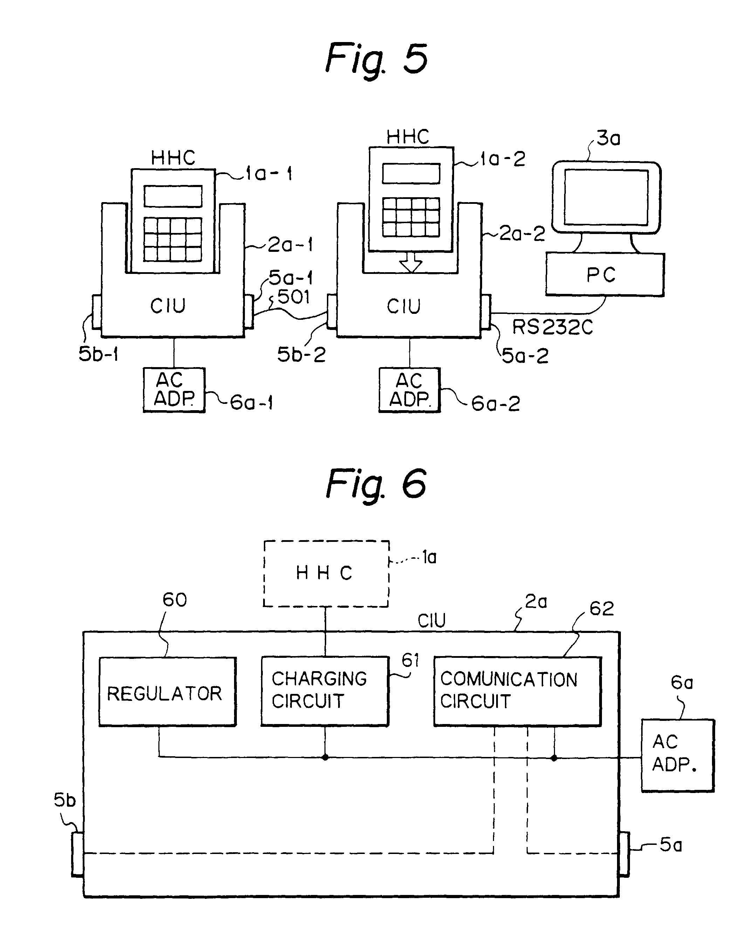

In another conventional system (as described later with reference to Figure 5) a data transmission unit (CIU) is adapted for connection to a movable terminal unit to permit transfer from the movable terminal unit to a data receiving unit of data stored in the movable terminal unit. This data transmission unit is adapted to be connected in series with at least one further such data transmission unit and comprises: first and second connector means, the first connector means serving to permit the data transmission unit to be connected to the further such data transmission unit, if any, which precedes the subject data transmission unit in the said series, and the second connector means serving to permit the subject data transmission unit to be connected to the further such data transmission unit, if any, which follows the subject data transmission unit in the said series or to the said data receiving unit; interconnecting means connected to the said first and second connector means for providing a data transfer path, for transferring data from data pins (b, c) of the said first connector means to data pins (b, c) of the said second connector means; and a power supply connector, separate from the said first and second connector means, to which a power supply adapter can be connected when the unit is in use. In this conventional system a power supply adapter is connected to each of the CIUs. Therefore, the number of power supply adapters is the same as the number of CIUs, which also causes a space problem, and in addition, causes the total system to be expensive.

Incidentally, EP-A-0161798 discloses a computer terminal having multiple peripheral units simultaneously connected thereto. The peripheral units such as a keyboard; joystick, etc are connected in series with one another and a bus segment within each peripheral unit serves to transmit data and power between respective left-hand and right-hand connectors of the unit. The units may be interconnected by connection cables or directly connected together. The computer terminal is connected to one of the units by a connector cable so that there is a only one cable connecting all of the units to the terminal. The units supply data to the terminal, and the computer terminal supplies electrical power to the units, via this connector cable.

A data transmission unit embodying the first aspect of the present invention is characterised in that the said interconnecting means further provide a power transfer path for transferring electrical power from a power supply pin of one of the said first and second connector means to a power supply pin of the other of those two connector means; and in that power supply circuitry is connected between the said power supply connector and the said power transfer path for delivering electrical power supplied by the adapter to that path, so that when the data transmission unit is connected in the said series with further such data transmission units, the electrical power for at least one of those further data transmission units is supplied by the adapter and not by the said data receiving unit.

Such a data transmission unit is capable of supplying a current from a single power supply adapter to all data transmission units connected in series so as to reduce the space and cost associated with multiple power supply adapters.

In one embodiment the said power supply circuitry simply connects the power supply connector directly to the power transfer path. Preferably, however, the said power supply circuitry comprises reverse current preventing means connected between the said power supply pins and the said power supply connector, for preventing a reverse current from being conducted from one of the said power supply pins to the said power supply connector.

In one embodiment the said power transfer path comprises a power supply line provided between the said power supply pins; and the data transmission unit further comprises a charging circuit for charging the movable terminal unit when it is connected to the data transmission unit, a communication circuit for effecting transfer of data from such a connected movable terminal unit to the said data receiving unit via the said data transfer path of the data transmission unit and the respective such data transfer paths of any intermediate further data transmission units of the said series, and a voltage regulator for converting the voltage at the said power supply line into a voltage suitable for powering the said connected movable terminal unit; the said charging circuit, the said communication circuit, and the said voltage regulator being connected to the said power supply line.

The data transmission unit preferably further comprises switching means connected between the said power supply line and the said voltage regulator and operable to cause a power supply current to be delivered to the said voltage regulator only when the said data transmission unit is transferring data from such a connected movable terminal unit to the said data receiving unit.

In one embodiment the said power supply connector comprises a single-use power input terminal for receiving a small amount of power sufficient for powering only a single such data transmission unit, and a multiple-use power input terminal for receiving a large amount of power sufficient for powering a plurality of such data transmission units; the said single-use power input terminal is connected operatively to the said communication circuit; and the said power supply circuitry comprises a first reverse current preventing diode, connected between the said power supply line and the said single-use power input terminal, for preventing a reverse current from flowing from said single-use power input terminal to the said power supply pins, and said multiple-use power input terminal being connected via the said first reverse current preventing diode to the said communication circuit for permitting a forward current to flow from said multiple-use power input terminal to said communication circuit.

Preferably, said power supply circuitry further comprises a second reverse current preventing diode connected between the said multiple-use power input terminal and said power supply line for preventing a reverse current from flowing from said power supply line to said multiple-use power input terminal, and a third reverse current preventing diode connected, in series with said first reverse current preventing diode, between said single-use power input terminal and said power supply line for preventing a reverse current from flowing from said power supply line to said single-use power input terminal.

The movable terminal unit may be a hand-held computer, and said data transmission unit may be a communication interface unit.

The said first and second connector means may be adapted to be connected by connector cables to the said preceding unit, or to the said following unit, of the said series as the case may be.

Alternatively, the said first and second connector means may be adapted to be connected directly to the said preceding unit, or to the said following unit, of the said series as the case may be. It is possible to reduce the space between two adjacent data transmission units by directly coupling the same. Furthermore, it is possible to simplify the connecting operation of data transmission units by directly coupling two adjacent data transmission units without a data cable.

In one directly-coupled embodiment, the data transmission unit has respective side surfaces opposite one another, one of the said first and second connector means comprising a connector that protrudes from one of the said side surfaces and the other of those two connector means comprising a connector that is recessed into the other one of the said side surfaces; the protruding connector of the subject data transmission unit being adapted to be coupled directly to such a recessed connector of the said preceding data transmission unit of the said series, and the recessed connector of the said subject data transmission unit being adapted to be coupled directly to such a protruding connector of the said following transmission unit of the said series.

Preferably, at least one coupling plate is provided on a bottom surface of the data transmission unit, which coupling plate serves to fasten the coupling between the said subject data transmission unit and the said preceding data transmission unit, or the said following data transmission unit, of the said series.

According to a second aspect of the present invention there is provided a data receiving unit; and a plurality of data transmission units, each being a data transmission unit embodying the aforesaid first aspect of the present invention, connected in series with one another such that the said second connector means of the last data transmission unit of the said series are connected to the said data receiving unit, and such that the said first connector means of each data transmission unit are connected to the said second connector means of the preceding data transmission unit, if any, of the said series, thereby connecting the said power supply pin of the first connector means concerned to the said power supply pin of the second connector means concerned to permit the supply of electrical power between the two data transmission units concerned so that, when such a power supply adapter is connected to one of the data transmission units of the said series, the electrical power for at least one of the other data transmission units of the series is supplied by the adapter and not by the data receiving unit.

Reference will now be made, by way of example, to the accompanying drawings, in which:
Figure 1 is a perspective view showing a conventional hand-held computer;
Fig. 2 is a perspective view showing a conventional communication interface unit;
Fig. 3 is a block diagram showing parts of the conventional hand-held computer and communication interface unit of Figures 1 and 2;
Fig. 4 is a block diagram showing a conventional data transmission system using the hand-held computer and the communication interface unit; and
Fig. 5 is a diagram showing another conventional data transmission system in which a plurality of communication interface units are connected in series;
Fig. 6 is a block diagram showing a conventional control unit in one of the communication interface units of the Figure 5 system;
Fig. 7 is a block diagram showing a data transmission system in which a plurality of communication interface units are directly connected;
Fig. 8 is a perspective view showing a communication interface unit according to an embodiment of the present invention;
Fig. 9 is a view showing a bottom surface of the communication interface unit shown in Fig. 8;
Fig. 10 is a circuit diagram showing a first example of the circuit construction of a communication interface unit embodying the present invention;
Fig. 11 is a diagram showing another communication interface unit embodying the present invention;
Fig. 12 is a circuit diagram showing a switching transistor connected between a power supply line and a voltage regulator, according to still another embodiment of the present invention;
Fig. 13 is a block diagram showing multiple communication interface units, each as shown in Fig. 11, connected in series;
Fig. 14 is a circuit diagram of power supply circuitry in another communication interface unit embodying the present invention;
Fig. 15 is a side view of a DC plug adapted to be inserted into a power supply connector in the communication interface unit shown in Fig. 14; and
Fig. 16 is an end view of the power supply connector adapted to receive the DC plug shown in Fig. 15.

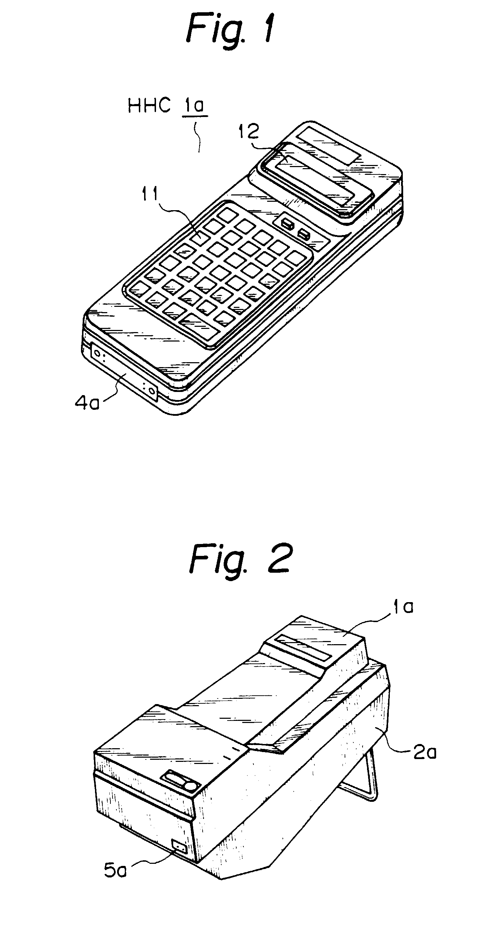

For a better understanding of the present invention, comparable conventional systems will first be described with reference to Figs. 1 to 6.

Figure 1 is a perspective view of a hand-held computer (HHC), which is a movable terminal. As shown in Fig. 1, an HHC la is provided with an operating panel 11 and a displaying part 12 on its upper surface, and a light connector 4a with a light emitting element is provided at the rear end surface. The power supply is a battery and the battery is chargeable by a charging circuit in a communication interface unit.

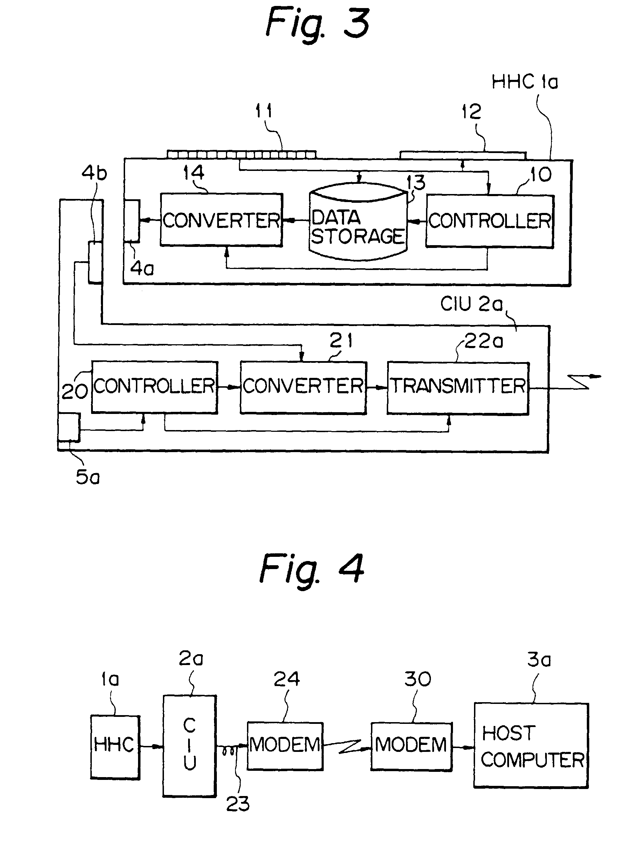

Figure 2 is a perspective view showing a conventional communication interface unit (CIU), which is a data transmission unit. As shown in Fig. 2, a CIU 2a is provided with a light connector 4b (see Fig. 3) with a light receiving element at a position opposing the light connector 4a when the HHC la is mounted on the top surface of the CIU 2a, and a power connector 5a at the rear end surface.

Figure 3 is a block diagram showing a conventional structure of the hand-held computer and the communication interface unit. As shown in Fig. 3, the HHC la includes a control unit 10, a data storage 13, and a converting unit 14. The CIU 2a includes a control unit 20, a converting unit 21, a transmitting unit 22a and the power supply connector 5a.

The operation panel 11 is provided with ten keys for inputting data and operating functions such as transmission instruction function and so forth.

The control unit 10 is provided with a CPU and a control program so that, in response to the input form the operating panel 11, the control program controls each part to perform data accessing, transmission, and so forth. The data storage 13 stores data input from the operating panel 11. The converting unit 14 converts data output from the data memory 13 into light data.

The control unit 20 is provided with a CPU and a control program that controls each part to perform the transmission of data sent from the HHC la. The converting unit 21 converts the light data into transmitting data. The transmitting unit 22a transmits the transmitting data to a host computer which is a data receiving unit (not shown in Fig. 3).

The operation of data transmission involving the HHC la and the CIU 2a is as follows.

In general, the transmission of data stored in the HHC la may be carried out within an office, however, there are many cases when liaison clerks transmit data from their cars when they are outside the office.

For example, in an office, when the host computer (here, for example, an office computer) is placed near the CIU 2a, the data input is effected by directly connecting the host computer and the CIU 2a through a connecting cord (not shown in Fig. 3) and by mounting the HHC la on the CIU 2a with the light connector 4a being opposite the light connector 4b.

Then, when the transmission instructing button on the operating panel 11 is pressed, the data stored in the data storage 13 is output and is converted into light data by the converting unit 14. The light data is transmitted from the light emitting element to the light receiving element in the light connector 4b. The received light data is converted into transmitting data by the converting unit 21 and is transmitted from the transmitting unit 22a to the host computer.

Figure 4 is a block diagram showing an example of a conventional data transmission system for transmitting data from the CIU 2a to the host computer 3a.

In Fig. 4, reference numerals 24 and 30 represent modems. The CIU la is connected through a connecting cord 23 to the modem 24. The transmitting data is transmitted from the modem 24,through a public network or a directly connected private line,to the modem 30 which is connected to a host computer 3a.

Instead of transmitting data through the public network or through the directly connected private line to the modems 24 and 30, the data from the CIU 2a may be directly transmitted to the host computer 3a through a connecting cord 23 without passing through the modems 24 and 30.

The CIU 2a may be placed on a desk or hung on a wall.

The problem in the above described prior art is that the connection cord 23 is required. When there are a plurality of pairs of HHCs and CIUs, a plurality of connection cords are necessary. The space for the plurality of connection cords lowers the effective use of the floor in the office. Further, if the host computer has only a single connector for connecting the cable from the CIU, each cable must be substituted by another cable when another CIU is to be connected to the host computer, which is an inconvenient operation.

Similar problems are present with respect to the power supply connecting cords when they are connected to the power supply connectors 5a (see Fig. 3) of the respective CIUs. The problems in the power supply connecting cords in the prior art will be discussed with reference to Figs. 5 and 6.

Fig. 5 is a diagram showing another conventional data transmission system in which a plurality of communication interface units are connected in series, and Fig. 6 is a block diagram showing a conventional control unit in the communication interface unit.

In Fig. 5, 1a-1 and la-2 are hand-held computers (HHC); 2a-1 and 2a-2 are communication interface units; 5a-1 and 5a-2 are external connectors for outputting data to the adjacent CIUs or to the host computer 3a; 5b-1 and 5b-2 are external connectors for receiving data from the adjacent CIUs; 6a-1 and 6a-2 are power supply adapters; and 3a is a host computer for communicating with the hand-held computers 1a-1 and la-2. The adjacent communication interface units 2a-1 and 2a-2 are connected in series by a data cable 501 in accordance with, for example, the RS232C interface. When there are three or more CIUs, these CIUs are connected in series by data cables. The right-most CIU 2a-2 is connected to the host computer 3a such as a personal computer through, for example, the RS232C interface, for delivering data between the host computer 3a and the hand-held computers 2a-1 and 2a-2.

In Fig. 6, 2a is one of the communication interface units 2a-1 and 2a-1 shown in Fig. 5; 60 is a voltage regulator for providing a driving voltage to the HHC la; 61 is a charging circuit; 62 is a communicating circuit in accordance with the RS232C interface; and 5a and 5b are external connectors. The charging circuit 61 functions to supply a charging current from an AC power supply adapter 6a to the hand-held computer la.

A plurality of communication interface units 2a can be connected through cables, through the external connectors 5a and 5b. The external connector 5b is referred to as an ID (Input Data) connector, and the external connector 5a is referred to as an OD (Output Data) connector. The OD connector 5a of the communication interface unit 2a-2 is connected to the host computer 3a, and its ID connector 5b is connected to the OD connector of the adjacent communication interface unit 2a-1. Thus, by connecting the communication interface units to each other by cables, access to the host computer 3a is possible from any one of the hand-held computers.

In this example of the prior art, due to the connecting data cable between adjacent CIUs, the area increases in accordance with an increase in the number of CIUs. In addition, in the conventional data transmission system shown in Fig. 5, one power supply adapter 6a is required for one communication interface unit. Each power supply adapter supplies a current for charging each hand-held computer la and for communicating with the host computer 3a. Therefore, when multiple communication interface units 2a are connected, the number of power supply adapters 6a must be the same as the number of the communication interface units 2a so that there is a problem in that the construction is very complex and the system becomes very expensive. The area required for the power supply adapters is also a problem.

Now, embodiments of the present invention will be described. Throughout the description, the same reference numbers or symbols represent the same parts.

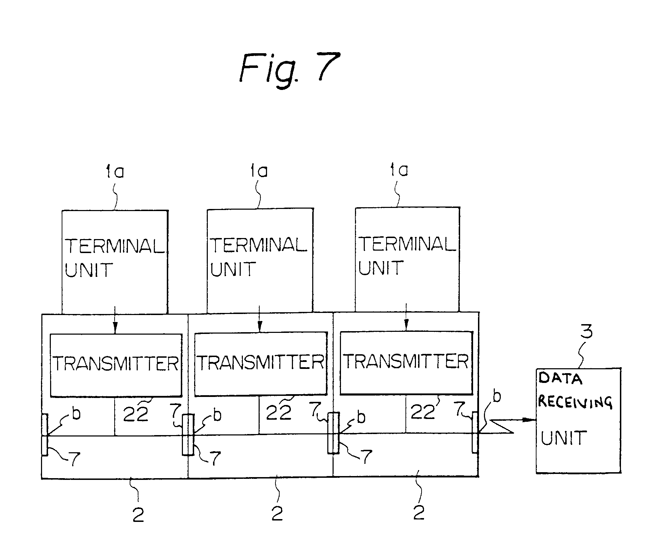

Figure 7 shows a principle construction diagram of a data transmission system according to an embodiment of the present invention.

In the figure, the data transmission system includes a plurality of data transmission units 2 such as communication interface units CIUs. Each of the data transmission units 2 can be connected to a movable terminal unit la such as a hand-held computer HHC. When the movable terminal unit la is mounted on the data transmission unit 2, data stored in the movable terminal unit la is transmitted form the data transmission unit 2 to a data receiving unit 3 such as a host computer, or data is transmitted from the data receiving unit 3 through the data transmission unit to the movable terminal unit la. Each of the data transmission units 2 includes couplers 7 for directly coupling the data transmission unit 2 to a preceding-stage data transmission unit and/or a following-stage data transmission unit without using a connecting cable. Each of the couplers 7 includes a data pin (b) for passing data from one of the movable terminal unit la and the preceding-stage data transmission unit to one of the following-stage data transmission units and the data receiving unit 3.

In the above arrangement, the movable terminal units 1a are respectively connected to a plurality of data transmission terminals 2 that are themselves interconnected by the couplers 7, and one of the plurality of the interconnected data transmission units 2 is connected to the data receiving unit 3 so that the data stored in the respective terminal units 1a can be sequentially transmitted from the data transmission units 2 to the data receiving unit 3.

When a plurality of data transmission units 2, to which the movable terminal units la are respectively connected, are coupled in series by the couplers 7, the data transmission unit at each stage, other than the first and last stages, of the series is connected to its preceding-stage unit and to its following-stage unit, and the data transmission unit 2 of the last stage is connected to the data receiving unit 3. When the data stored in the respective movable terminal units la are to be transmitted, the transmitting data is sequentially transmitted, starting from the data transmission unit 2 connected to the data receiving unit 3. Therefore, when a plurality of data transmission units 2 are to be connected to the data receiving unit 3 by, for example, a connection cord, only a single connecting cord is necessary. Thus, it is not necessary to connect the units using a plurality of connection cords, or to replace one connection cord by another, thereby making the operation simple and thereby avoiding congestion of connection cords. In addition, since the adjacent data transmission units are directly coupled by the couplers 7, there is no space between the adjacent data transmission units 2 thereby reducing the area required for placing the data transmission units.

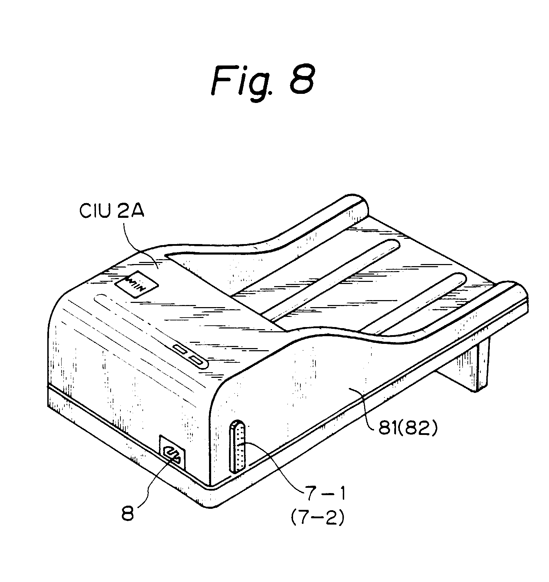

Figure 8 is a perspective view of a communication interface unit 2A as an example of the data transmission unit, according to an embodiment of the present invention. In Fig. 8, the data transmission unit 2A has side surfaces 81 and 82 opposite each other. The couplers 7 on both side surfaces are a protruding connector 7-1 and a recessed connector 7-2. The protruding connector 7-1 and the recessed connector 7-2 include data pins. The protruding connector 7-1 is adapted so as to be coupled to the recessed connector of the preceding-stage data transmission unit in the series, and the recessed connector 7-2 is adapted so as to be coupled to the protruding connector of the following-stage data transmission unit of the series.

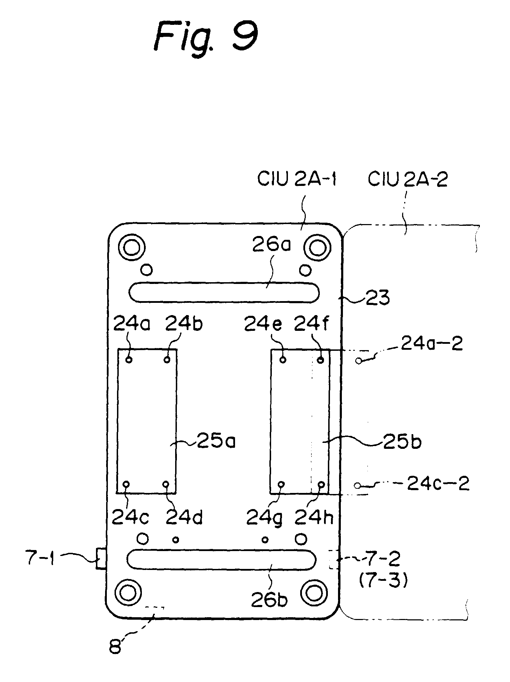

Figure 9 is a view from underneath of the communication interface units 2A-1 and 2A-2 coupled together. As shown in Fig. 9, the CIU 2A-1 comprises a bottom plate 23 and two coupling plates 25a and 25b provided on the bottom surface 23. The coupling plate 25a is used to fasten the coupling between the CIU 2A-1 and the CIU 2A-2 which is the next CIU after the CIU 2A-1. The coupling plate 25b is used to fasten the coupling between the CIU 2A-1 and the preceding-stage CIU.

In Fig. 9, tapped holes 24a to 24d and 24e to 24h are provided at positions close to the sides of the bottom surface 23 so that the coupling plates 25a and 25b are fixed by screws in the tapped holes 24a to 24d and 24e to 24h. Namely, the tapped holes 24a to 24d and 24e to 24h are provided at positions so that, when the CIU 2A-1 is to be coupled to another CIU 2A-2 for example, the coupling between the protruding coupler 7-1 of the CIU 2A-1 and the recessed coupler of the CIU 2A-2 can be fastened by removing the coupling plate 25b from the tapped holes 24e to 24h and then fixing the coupling plate 25b by the screws fitted into tapped holes 24f, 24h, 24a-2 and 24c-2. Only the coupling plate 25b is moved as illustrated in the figure by a dash-two dots line.

Also, respective foot attachment parts 26a and 26b have tapped holes (not shown). The foot attachment part 26a serves to attach a foot (not shown) to the unit when the CIU 2A-1 is to be placed on a table when in use, and the foot attachment part 26b serves to attach the foot to the unit when the CIU is placed on a wall, the foot being attached by screwing it to the foot attachment part.

When a plurality of the CIUs are directly coupled in series by the couplers, the left-most or the right-most CIU (only) may be directly coupled to the data receiving unit 3. Alternatively, one of the CIUs may be connected to the data receiving unit 3 through a data cable.

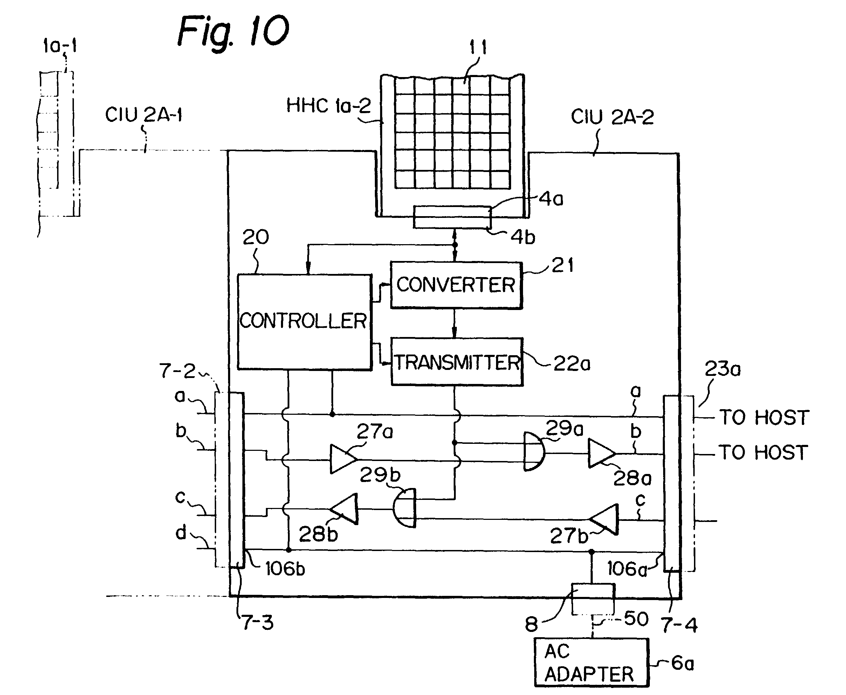

Figure 10 is a block diagram showing the circuit construction of the CIU 2A-2. In the figure, 27a and 27b, and 28a and 28b are receivers and drivers for wave forming, and 29a and 29b are OR circuits. The CIU 2A-2 includes a protruding coupler 7-3 and a recessed coupler 7-4. To the couplers 7-3 and 7-4, input/output terminals for transmitting data, a power supply terminal and so forth are connected. Namely, in the figure, (a) is a command line through which a notification to the host 3a and a command from the host 3a pass, (b) and (c) are transmission lines (a data transfer path) through which transmitting data pass, and (d) is a power supply line (a power transfer path). Here, the transmission line (b) is used for transmitting data of the CIUs 2A-1 and 2A-2 when - as shown in Figure 10 - the CIU 2A-2 is connected to the CIU 2A-1 and a connecting cord 23a linking the series-connection CIUs to the host 3a is connected to the coupler 7-4 of the CIU 2A-2. The transmission line (c) is the line used for transmitting data of the CIU 2A-2 when the connecting cord 23a is connected to the coupler (not shown) of the CIU 2A-1 that corresponds to the coupler of the CIU 2A-2.

By the above construction, when, for example, the CIU 2A-2 is connected to the CIU 2A-1 and when HHCs la and 1b are mounted in these CIUs respectively, as shown in a dash-two dots line in Fig. 10, the coupler 7-2 of the CIU 2A-1 is connected to the coupler 7-3 in the CIU 2A-2 and, as shown in Fig. 9, the bottom parts are coupled by means of the coupling plates 25a and 25b, the corresponding transmitting data input/output terminals, power supply terminals, and so forth in the CIUs 2A-1 and 2A-2 are connected to each other.

Also, a power supply connecting cord 50 is connected to the power supply connector 8, and the connecting cord 23a for transmission is connected to the coupler 7-4 of the CIU 2A-2. By the connection of the power connecting cord 50, the power supplies for the CIU 2A-2 and the CIU 2A-1 become common via the power supply line (d).

The coupler 7-3 of the CIU 2A-2 includes a power supply pin 106b adapted so as to be connected to a power supply pin of the preceding-stage CIU 2A-1. The coupler 7-4 of the CIU 2A-2 includes a power supply pine 106a adapted so as to be connected to a power supply pin of the data receiving unit 3 or of the following-stage CIU (not shown in Fig. 10), for passing a power supply current.

The power supply connector 8 is adapted to connect a power supply adapter 6a for delivering a power supply current to the power supply pins.

Next, when the HHCs 1a-1 and la-2 are mounted on the CIUs 2A-1 and 2A-2 respectively, and are directly coupled, the fact of the connection is imparted via the command line (a) and the CIUs 2A-1 and 2A-2to the data receiving unit 3, which is a host computer such as a personal computer.

Then, from the host computer 3, first, a data transmission instruction is output to the HHC la-2 so that the data stored in the HHC la-2 is converted into light data, as explained in the prior art example, and is transmitted to the CIU 2A-2, where it is converted to transmitting data by the converter 21, and then transmitted by the transmitting unit 22a via the OR circuit 29a of the transmission line (b), the driver 28a, and the connecting cord 23a.

When the data transmission from the HHC la-2 is completed, a data transmission instruction is output from the host computer 3 to the HHC 1a-1 so that the data stored in the HHC 1a-1 is converted into light data and is transmitted to the CIU 2A-1 where it is converted into transmitting data, which is transmitted from atransmitting unit (not shown) through the transmission line (b) inside the CIU 2A-1, the couplers 7-2 and 7-3, the transmission line (b) of the CIU 2A-2, and the connecting cord 23a.

Thus, when the data stored in a plurality of HHCs is to be transmitted by mounting them on respective corresponding CIUs, the connection to the host computer 3 can be performed by a single connection cord 23a, and the connection to the power supply can be made by the single power supply connecting cord 50, which is common for the respective CIUs, by providing the transmission lines (b) and (c) and the couplers that connect the power supply line (d) to the power supply connecting cord 50.

Accordingly, the excessive labor required to connect a plurality of connecting cords to respective CIUs 2A-1 and 2A-2 individually or replacement thereof is eliminated. Also, congestion of connecting cords can be prevented. Therefore, it is very convenient when the number of HHCs and CIUs to be used is increased in accordance with an increase in the amount of data to be handled.

The present invention is not restricted to the above described embodiment with reference to Fig. 10. Instead of connecting the output of the transmitting unit 22a to the OR circuits 29a and 29b, the output of the converter 21 may alternatively be connected to the OR circuits 29a and 29b, when the transmitting unit 22a is not provided in each CIU. Further, alternatively, the data line from the connector 4b may be directly connected to the OR circuits 29a and 29b when the converter 21 and the transmitting unit 22a are not provided in each CIU.

Also, in the above example, an explanation was provided for the case when only two of the CIUs 2A-1 and 2A-2 are coupled. However, three or more CIUs may of course be coupled in series. In this case, the connecting cord 23a and the power connecting cord 50 may be connected to any one of the CIUs placed at the end position or at the intermediate position, thereby resulting in a similar effect.

Further, in the above example, an explanation was provided in which, when the HHCs 1a-1 and la-2 are mounted, the fact is imparted to the host computer 3, and data is transmitted from the HHCs 1a-1 and la-2 by a data transmission command from the host computer 3 . However, another method may also be possible. For example, by sequentially pressing the transmission buttons on the operation panels 11 of the HHCs 1a-1 and la-2 mounted on the CIUs 2A-1 and 2A-2, data may be transmitted.

According to another embodiment of the present invention, when a plurality of the CIUs are directly coupled in series by the couplers, or indirectly connected in series through connecting cables, only one power supply adapter 6a is connected to the power supply connector in one of the CIUs. The other CIUs are supplied with the power supply current from the power supply adapter 6a.

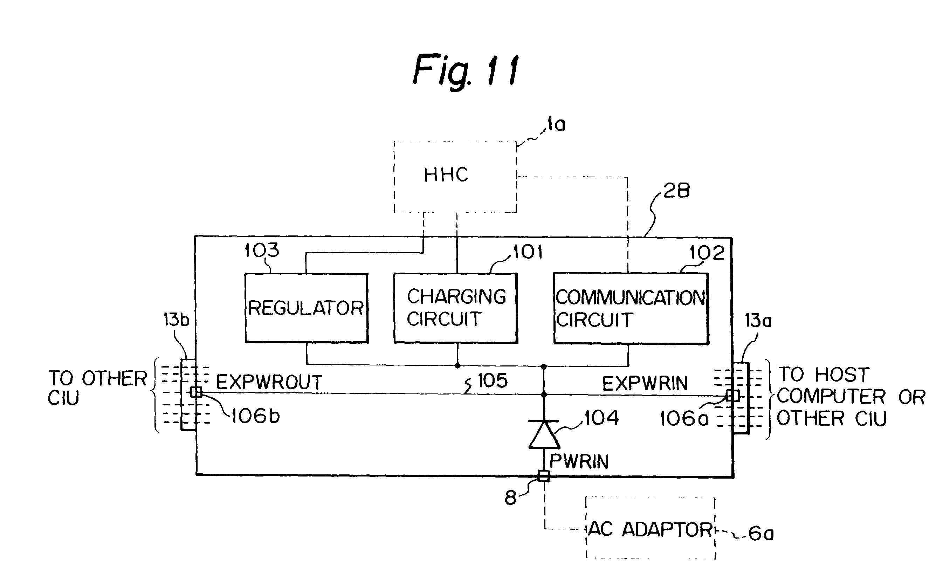

Figure 11 is a principle construction diagram of this embodiment. In Fig. 11, a communication interface unit (CIU) 2B comprises external connectors 13a and 13b for delivering data between, on the one hand, a host computer or other communication interface units connected to said connectors and, on the other hand, a hand-held computer 1a. Between the external connector 13a and another external connector of another communication interface unit or the host computer, a connection data cable is connected. The external connectors 13a and 13b may alternatively be the same as the couplers 7-1 and 7-2 for direct coupling as in the previously described embodiment shown in Fig. 9.

The hand-held computer la can be inserted into the communication interface unit 2B to receive a charging current from a charging circuit 101.

According to this embodiment of the present invention, as shown in Fig. 11, the external connectors 13a and 13b are provided with current supplying pins 106a and 106b, to which a charging circuit 101 for charging the hand-held computer la, a voltage regulator for converting a voltage applied by an AC adapter 6a into a voltage suitable for driving the hand-held computer la, and a communication circuit 102 are connected through a power supply line 105.

Further, a reverse current preventing diode 104 is connected between the power supply line 105 and the power supply conductor 8, to prevent a reverse current from being conducted from one of said power supply pins to the power supply connector 8.

When the AC power supply adapter 6a is connected to the power supply connector 8 in the communication interface unit 2B, the current from the power supply adapter 6a is separated into a current that is supplied to the main body of the communication interface unit 2B and currents that are flowing through the current supplying pins 106a and 106b to the adjacent communication interface units. The charging current for the hand-held computer la is supplied from the power supply adapter 6a through the diode 104 to the charging circuit 101, whereby the charging of the hand-held computer la is carried out.

When the communication interface unit 2B is in a multiple connection configuration in which another communication interface unit is connected to the external connector 13a or 13b, it is not always necessary to connect a power supply adapter 6a to each communication interface unit, and the power supply adapter 6a may be connected to only one of the communication interface units, according to an embodiment of the present invention. In this case, the charging current is supplied from another communication interface unit through the current supplying pin 106a or 106b in the external connector 13a or 13b.

In Fig. 11, PWRIN represents a power input from the AC power supply adapter 6a, and EXPWRIN and EXPWROUT respectively represent input and output currents from the current supplying terminals 106a and 106b provided in the external connectors 13a and 13b.

When the AC adapter 6a is connected to the power supply connector 8, the power input PWRIN is supplied through the diode 104 to the charging circuit 101, the communication circuit 102, and the voltage regulator 103 in the main body of the communication interface unit 2B, and is also sent to the current supplying pins 106a and 106b through the power supply line 105. On the other hand, when the power supply adapter 6a is not connected to this communication interface unit 2B, and when the power supply adapter 6a is connected to another communication interface unit that is connected in multiple connection, the current from the current supplying pin 106a or 106b is supplied to the charging circuit 101, the communication circuit 102, and the voltage regulator 103.

Instead of providing a single current supplying pin 106a or 106b, a plurality of sets of current supplying pins may be provided when the amount of current is so large that a single pin cannot stand the current.

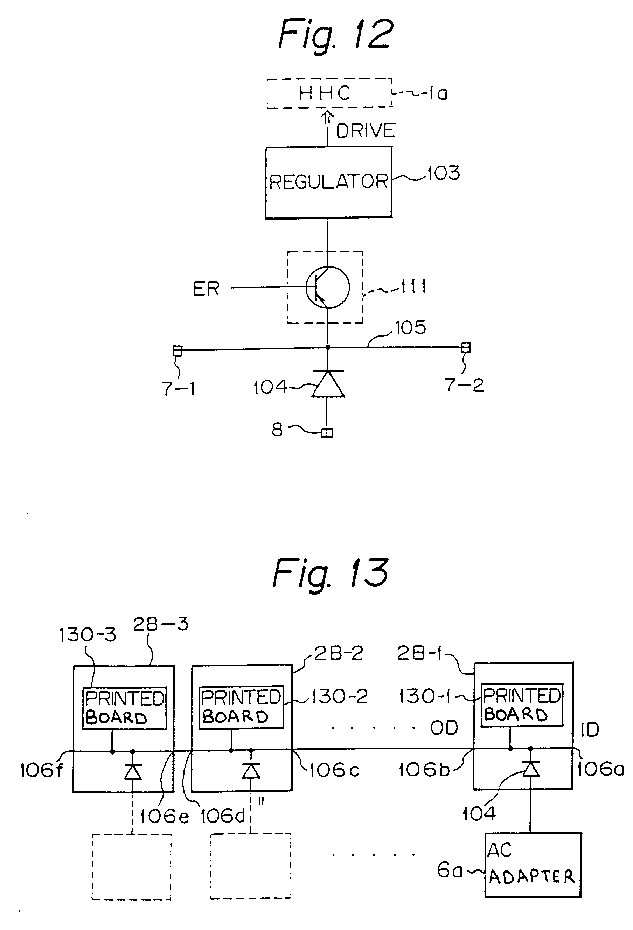

According to a further embodiment of the present invention, as shown in Fig. 12, a switch 111 is provided between the power supply line 105 and the voltage regulator 103. The switch 111 is ON only when the hand-held computer la inserted into the communication interface unit 2B is in a state of communication with the host unit 3, and is OFF when it is not in such a state of communication. When, for example, an ER signal defined in the RS232C interface is at a high level, the HHC 1a is in a state of communication. Namely, the transistor 111 is controlled in accordance with the presence or absence of the ER signal. Thus, with a simple circuit construction, supplying a driving current can be efficiently carried out only on the hand-held computer under communication.

Thus, according to the embodiment of the present invention shown in Fig. 11, the current supplying pins 106a and 106b are provided in the external connectors 13a and 13b that accommodate not only the data signal and the command signal but also the charging and driving current, so that it is possible to supply a current to the other communication interface units, or to receive a current from the other communication interface units, through the external connector 13a or 13b.
Accordingly, when the communication interface units 2B are in a multiple-connection configuration, and when the power supply adapter 6a is connected to one of the communication interface units 2B, the power is efficiently supplied with a voltage drop only across the diode 104, regardless of the number of communication interface units 2B.

Also, as shown in Fig. 12, by providing a switch 111, the driving current is supplied only to the communication interface unit 2B which is at the time in a state of communication so that power can be saved.

Figure 13 is a block diagram showing multiple communication interface units (CIUs) connected in series, each being a CIU according to the Figure 11 (or 12) embodiment of the present invention. In the figure, 130-1 to 130-3 are printed boards of the main body of the communication interface units 2B-1 to 2B-3, in each of which the charging circuit 101, the communication circuit 102, and the voltage regulator 103 are provided.

When multiple communication interface units 2B-1 to 2B-3 are connected in series as shown in Fig. 13, the power supply adapter 6a may be inserted into any one of the communication interface units, and, even when another power supply adapter is erroneously inserted into another unit, a reverse current to the power supply adapter 6a can be prevented by the function of the reverse current preventing diode 104. The AC power supply adapter 6a, by nature, supplies currents in accordance with the applied loads, and therefore, has a mechanism to supply a current, the amount of which corresponds to the number of connected communication interface units.

With a CIU that is usable in a multiple configuration of the kind shown in Figure 13, a large-capacity power supply adapter, capable of supplying current to a plurality of communication interface units, will sometimes need to be used, but it is inconvenient to have to use such a large capacity adapter when the communication interface unit is in use on its own because in this case the adapter will be excessively heavy and large. Accordingly, it is convenient if two types of power supply adapter, i.e., a low-price small-size "single-use" power supply adapter and a "multiple-use" power supply adapter, can be used selectively to drive the communication interface units by, for example, making a DC plug common.

To this end, according to still a further embodiment of the present invention, a large capacity power supply adapter (which is referred to as a multiple-use power supply adapter), and also a low-price small-scale power supply adapter (which is referred to as a single-use power supply adapter) having an ability to supply a charging current to only one communication interface unit 2B, can be used. If a CIU is being used in a multi-connection configuration, in which a plurality of communication interface units 2B are connected, and such a single-use power supply adapter is (accidentally) connected to the CIU, the circuitry must be designed such that it can prevent a fault owing to insufficient power during a charging or a data transfer.

To realize such circuitry, in the adapter connecting terminal 8, a power supply of the single-use power supply adapter and a power supply of the multiple-use power supply adapter, for supplying a charging current to a plurality of communication interface units 2B, are preferably provided separately. The inserting portions of the plugs for connecting the power supply adapters may alternatively be common, in view of the limited space available.

If the plug inserting portions are made to be common for single-use and multiple-use adapters, and when a plurality of communication interface units are to be driven, if the single-use power supply adapter is erroneously inserted, there is a possibility that a fault will occur in the charging or data transfer because of insufficient power. Therefore, it is necessary to provide a means for preventing the erroneous insertion of the single-use power supply adapter when a plurality of communication interface units are to be driven, or to provide a means for recognizing that the single-use power supply adapter is erroneously inserted into the communication interface unit and for preventing a fault in a charging or a data transfer.

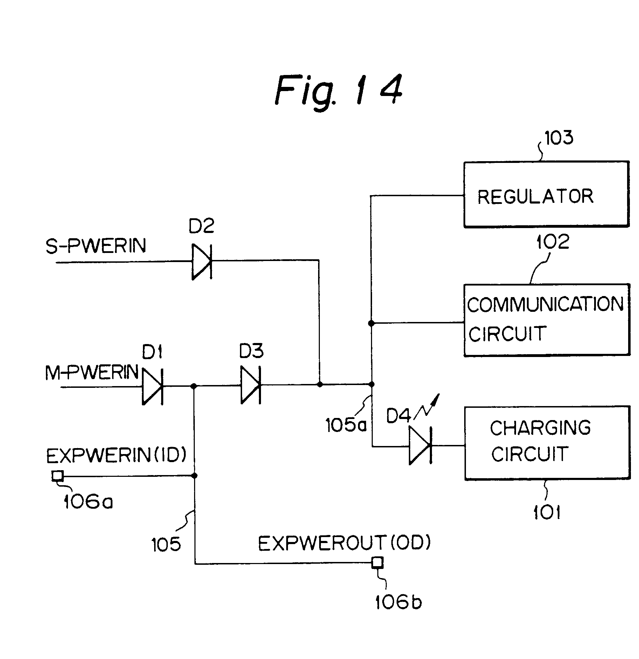

To distinguish between a single-use power supply adapter and a multiple-use power supply adapter without requiring the user to make this distinction, and to protect the communication interface unit when the wrong power supply adapter is erroneously used, the power supply circuitry in the communication interface unit is made to have a circuit construction, for example, as shown in Fig. 14.

In Fig. 14, S-PWERIN represents a power input from a single-use power supply adapter; M-PWERIN represents a power input from a multiple-use power supply adapter; EXPWERIN and EXPWEROUT respectively represent input/output currents from the current supplying pins 106a and 106b of the ID connector 13a and the OD connector 13b.

D1-D3 are reverse current preventing diodes, and D4 is a light emitting diode used as a charging lamp indicating that the unit is being charged. The anode of the diode D2 is connected to the S-PWERIN input, and the cathode thereof is connected to the anode of the LED D4, to the communication circuit 102, and to the voltage regulator 103. The anode of the diode D1 is connected to the M-PWERIN input, and the cathode thereof is connected to the anode of the diode D3, and to the current supplying pins 106a and 106b. The cathode of the diode D3 is connected to the cathode of the diode D2. The cathode of the LED D4 is connected to the charging circuit 101.

When the current from the S-PWERIN input is supplied, the current is supplied through the diode D2 to the charging circuit 101, the communication circuit 102, and the voltage regulator 103. The current from the S-PWERIN input does not flow through the diode D3 so that current from the single-use power supply adapter, if connected, is not supplied to the current supplying pins 106a and 106b.

When current is supplied to the M-PWERIN input, the current is supplied through the diodes D1 and D3 to the charging circuit 101, the communication circuit 102, and the voltage regulator 103, as well as through the diode D1 to the current supplying pins 106a and 106b. Therefore, the other communication interface units are supplied with the current.

Connections from the S-PWERIN and M-PWERIN power inputs are made to a power supply line 105a on a printed board of the communication interface unit 2B.

By this arrangement, when the single-use power supply adapter is inserted, the current does no flow into the current supplying pins 106a and 106b because of the operation of the diode D3. Therefore, even when the single-use power supply adapter is erroneously inserted when the CIU is connected in a multiple connection, the current is supplied to only the hand-held computer that is inserted into the particular communication interface unit to which the adapter is connected, and the flow of current to the other units can be prevented. When the charging current flows into the charging circuits 101, the light emitting diode D4 lights up so that it is immediately recognized at a glance that the hand-held computer is being charged.

When CIUs are connected in a multiple connection, and such a single-use power supply adapter is erroneously inserted into one of the CIUs, the user can easily recognize it as an error because the charging lamp (light emitting diode D4) is not lit in the CIUs other than the CIU into which the adapter is inserted.

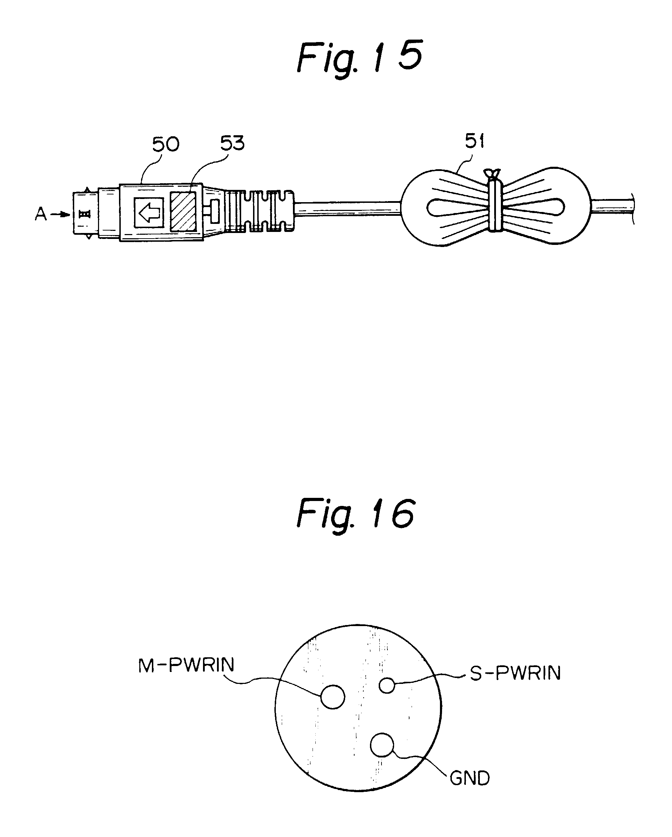

Figure 15 is a side view of a DC plug adapted so as to be inserted into the connector 8. In Fig. 15, 50 is a DC plug that connects the power supply adapter 6a to the communication interface unit 2B through the connector 8, and 51 is an adapter connecting cord.

Fig. 16 is an expanded end surface view of the inserting portion of the plug 50 shown in Fig. 15 when it is seen from a direction A. As shown in Fig. 16, the DC plug 50 used in the present embodiment has three pins, i.e., one for a ground line GND, one for a single-use power supply line (for S-PWERIN), and one for a multiple-use power supply line (for M-PWERIN). When the plug 50 is used as a single-use power supply plug, the pin for the ground line GND and the pin for the single-use power supply line are respectively connected to the ground line and the single-use power supply line. When the plug 50 is used as a multiple-use power supply plug, the pin for the ground line GND and the pin for the multiple-use power supply line are respectively connected to the ground line and the multiple-use power supply line. The user need not recognize whether the plug is a single use or a multiple use plug.

Although the user need not recognize the type of plug 50 when the circuit shown in Fig. 14 is used, it may be convenient to be able to visually distinguish the type of plug when the reverse current preventing diode D3 is not provided in the communication interface circuit 2B. When the DC plug 50 for the power supply adapter is made common for single-use and multiple-use, discrimination thereof is impossible. To distinguish the type of plug visually, a flag may be provided on the plug 50 for discriminating between single-use and multiple-use. Alternatively, by directly printing or affixing a seal on the plug 50, as shown in Fig. 15, a type describing part 53 is provided to distinguish between a single-use and a multiple-use adapter.

As described above, even when a plurality of communication interface units are connected together, an embodiment of the present invention provides, in external connectors of the communication interface units, pins for conducting charge current, so that the power can be supplied from a single power supply adapter to all of the communication interface units. Accordingly, the inconvenience of connecting the power supply adapters can be eliminated and space can be saved. In a further embodiment of the invention, by supplying a charging current only to the communication interface unit that is being used in multiple connection, power can be saved.

In addition, in yet another embodiment an inexpensive and compact single-use power supply adapter and a large capacity multiple-use power supply adapter can be used separately and, even when such a single-use power supply adapter is erroneously inserted into a communication interface unit that is connected in a multiple connection configuration, recognition thereof and protection of the unit can be assured.

In one embodiment of the present invention, since adjacent communication interface units are directly coupled without using a connecting cord, space between adjacent communication interface units can be saved. Further, since only one of the communication interface units is connected to a host computer, a large number of connecting cords between the communication interface units and the host computer is not necessary, thereby avoiding the problems otherwise associated with the handling of the connecting cords.

## Claims

1. A data transmission unit, for connection to a movable terminal unit (la-2) to permit transfer from the movable terminal unit to a data receiving unit (3) of data stored in the movable terminal unit, which data transmission unit (2A-2; 2B) is adapted to be connected in series with at least one further such data transmission unit (2A-1) and comprises:
first and second connector means (13a, 13b; 7), the first connector means (7-4; 13b) serving to permit the data transmission unit to be connected to the further such data transmission unit (2A-1), if any, which precedes the subject data transmission unit (2A-2) in the said series, and the second connector means (7-3; 13a) serving to permit the subject data transmission unit (2A-2) to be connected to the further such data transmission unit, if any, which follows the subject data transmission unit (2A-2) in the said series or to the said data receiving unit (3);
interconnecting means (27 to 29, 105) connected to the said first and second connector means (7-3, 7-4; 13b, 13a) for providing a data transfer path, for transferring data from data pins (b, c) of the said first connector means (7-3; 13b) to data pins (b, c) of the said second connector means (7-4; 13a), and
a power supply connector (8; S-PWERIN, M-PWERIN), separate from the said first and second connector means (7-3, 7-4; 13a, 13b), to which a power supply adapter (6a) can be connected when the unit is in use;
characterised in that the said interconnecting means (27 to 29, 105) further provide a power transfer path (105) for transferring electrical power from a power supply pin (106b/a) of one of the said first and second connector means to a power supply pin (106a/b) of the other of those two connector means;
and in that power supply circuitry (104; D1 to D3) is connected between the said power supply connector (8; S-PWERIN, M-PWERIN) and the said power transfer path (105) for delivering electrical power supplied by the adapter to that path, so that when the data transmission unit is connected in the said series with further such data transmission units, the electrical power for at least one of those further data transmission units is supplied by the adapter and not by the said data receiving unit.

2. A data transmission unit as claimed in claim 1, wherein the said power supply circuitry (104; D1 to D3) comprises reverse current preventing means (104) connected between the said power supply pins (106a, b) and the said power supply connector (8), for preventing a reverse current from being conducted from one of the said power supply pins (106a, b) to the said power supply connector (8).

3. A data transmission unit as claimed in claim 1 or 2, wherein:
the said power transfer path (105) comprises a power supply line provided between the said power supply pins (106a, 106b) ; and
the data transmission unit (2A; 2B) further comprises a charging circuit (101) for charging the movable terminal unit (1a) when it is connected to the data transmission unit, a communication circuit (102) for effecting transfer of data from such a connected movable terminal unit (1a) to the said data receiving unit (3) via the said data transfer path of the data transmission unit and the respective such data transfer paths of any intermediate further data transmission units of the said series, and a voltage regulator (103) for converting the voltage at the said power supply line (105) into a voltage suitable for powering the said connected movable terminal unit (1a);
the said charging circuit (101), the said communication circuit (102), and the said voltage regulator (103) being connected to the said power supply line (105).

4. A data transmission unit as claimed in claim 3, further comprising switching means (111) connected between the said power supply line (105) and the said voltage regulator (103) and operable to cause a power supply current to be delivered to the said voltage regulator (103) only when the said data transmission unit is transferring data from such a connected movable terminal unit (1a) to the said data receiving unit (3).

5. A data transmission unit as claimed in claim 3 or 4, wherein:
the said power supply connector (8) comprises a single-use power input terminal (S-PWERIN) for receiving a small amount of power sufficient for powering only a single such data transmission unit (2b), and a multiple-use power input terminal (M-PWERIN) for receiving a large amount of power sufficient for powering a plurality of such data transmission units;
the said single-use power input terminal (S-PWERIN) is connected operatively to the said communication circuit (102); and
the said power supply circuitry (D1 to D3) comprises a first reverse current preventing diode (D3), connected between the said power supply line (105) and the said single-use power input terminal (S-PWERIN), for preventing a reverse current from flowing from said single-use power input terminal (S-PWERIN) to the said power supply pins (106a, 106b), and said multiple-use power input terminal (M-PWERIN) being connected via the said first reverse current preventing diode (D3) to the said communication circuit (102) for permitting a forward current to flow from said multiple-use power input terminal to said communication circuit.

6. A data transmission unit as claimed in claim 5, wherein said power supply circuitry (D1 to D3) further comprises a second reverse current preventing diode (D1) connected between the said multiple-use power input terminal (M-PWERIN) and said power supply line (105) for preventing a reverse current from flowing from said power supply line (105) to said multiple-use power input terminal (M-PWERIN), and a third reverse current preventing diode (D2) connected, in series with said first reverse current preventing diode (D3), between said single-use power input terminal (S-PERWIN) and said power supply line (105) for preventing a reverse current from flowing from said power supply line (105) to said single-use power input terminal (S-PWERIN).

7. A data transmission unit as claimed in any preceding claim, wherein said movable terminal unit (la) is a hand-held computer, and said data transmission unit is a communication interface unit (2a).

8. A data transmission unit as claimed in any preceding claim, wherein the said first and second connector means are adapted to be connected by connector cables to the said preceding unit, or to the said following unit, of the said series as the case may be.

9. A data transmission unit as claimed in any one of claims 1 to 7, wherein the said first and second connector means (7) are adapted to be connected directly to the said preceding unit, or to the said following unit, of the said series as the case may be.

10. A data transmission unit as claimed in claim 9, having respective side surfaces opposite one another, one of the said first and second connector means (7) comprising a connector (7-1) that protrudes from one of the said side surfaces and the other of those two connector means comprising a connector (7-2) that is recessed into the other one of the said side surfaces;
the protruding connector (7-1) of the subject data transmission unit being adapted to be coupled directly to such a recessed connector (7-2) of the said preceding data transmission unit of the said series, and the recessed connector (7-2) of the said subject data transmission unit being adapted to be coupled directly to such a protruding connector (7-1) of the said following transmission unit of the said series.

11. A data transmission unit as claimed in claim 10, having at least one coupling plate (25a, 25b) provided on a bottom surface (23) of the data transmission unit, which coupling plate (25b) serves to fasten the coupling between the said subject data transmission unit (2A-1) and the said preceding data transmission unit, or the said following data transmission unit (2A-2), of the said series.

12. Apparatus comprising:
a data receiving unit (3); and
a plurality of data transmission units, each being a data transmission unit as claimed in any preceding claim, connected in series with one another such that the said second connector means (13b) of the last data transmission unit of the said series are connected to the said data receiving unit (3), and such that the said first connector means (7-3; 13b) of each data transmission unit are connected to the said second connector means (7-2; 13a) of the preceding data transmission unit, if any, of the said series, thereby connecting the said power supply pin (106b) of the first connector means (13b) concerned to the said power supply pin (106a) of the second connector means (13b) concerned to permit the supply of electrical power between the two data transmission units concerned so that, when such a power supply adapter is connected to one of the data transmission units of the said series, the electrical power for at least one of the other data transmission units of the series is supplied by the adapter and not by the data receiving unit.

13. Apparatus as claimed in claim 12, wherein when such a power supply adapter (6a) is connected to one of the said data transmission units of the said series the electrical power for each of the other data transmission units of the said series is supplied by the adapter.

14. Apparatus as claimed in claim 12, wherein each data transmission unit is a data transmission unit as claimed in claim 4, and, when such a power supply adapter (6a) is connected to one of the said data transmission units of the said series, the said electrical power supplied by the adapter is used to power just that one of the data transmission units of the said series which is at that time transferring data from its said connected movable terminal unit to the said data receiving unit.

15. Apparatus as claimed in any one of claims 12 to 14, wherein the connection from the said first connector means (7-3) of each data transmission unit (2A-2) to the second connector means (7-2) of the preceding data transmission unit (2A-1) of the said series is a direct connection that does not involve a connector cable.

16. Apparatus as claimed in claim 15, wherein each data transmission unit is a data transmission unit as claimed in claim 11, and the connection from the said last data transmission unit of the said series to the said data receiving unit (3) is by way of a connector cable.

17. Apparatus as claimed in any one of claims 12 to 14, wherein the connection from the said first connector means (13b) of each data transmission unit to the said second connector means (13a) of the preceding data transmission unit of the series is by way of a connector cable.

18. Apparatus as claimed in any one of claims 12 to 17, wherein said movable terminal unit (la) is a hand-held computer, each said data transmission unit is a communication interface unit (2a), and the said data receiving unit (3) is a host computer.

## Patentansprüche

1. Datenübertragungseinheit, zur Verbindung mit einer beweglichen Terminaleinheit (la-2), um eine Übertragung von der beweglichen Terminaleinheit zu einer Datenempfangseinheit (3) von Daten, die in der beweglichen Terminaleinheit gespeichert sind, zuzulassen, welche Datenübertragungseinheit (2A-2; 2B) dafür ausgelegt ist, um mit wenigstens einer weiteren derartigen Datenübertragungseinheit (2A-1) seriell verbunden zu werden, und umfaßt:
erste und zweite Verbindermittel (13a, 13b; 7), welches erste Verbindermittel (7-4; 13b) dazu dient, daß die Datenübertragungseinheit mit der weiteren derartigen Datenübertragungseinheit (2A-1), falls vorhanden, verbunden werden kann, die der betreffenden Datenübertragungseinheit (2A-2) in der Reihe vorausgeht, und welches zweite Verbindermittel (7-3; 13a) dazu dient, daß die betreffende Datenübertragungseinheit (2A-2) mit der weiteren derartigen Datenübertragungseinheit, falls vorhanden, die der betreffenden Datenübertragungseinheit (2A-2) in der genannten Reihe folgt, oder mit der Datenempfangseinheit (3) verbunden werden kann;
ein Zwischenverbindungsmittel (27 bis 29, 105), das mit den ersten und zweiten Verbindermitteln (7-3, 7-4; 13b, 13a) verbunden ist, zum Vorsehen eines Datenübertragungsweges, zum Übertragen von Daten von Datenanschlüssen (b, c) des ersten Verbindermittels (7-3; 13b) zu Datenanschlüssen (b, c) des zweiten Verbindermittels (7-4; 13a), und
einen Energiezuführungsverbinder (8; S-PWERIN, M-PWERIN), der von den ersten und zweiten Verbindermitteln (7-3, 7-4; 13a, 13b) separat ist und mit dem ein Energiezuführungsadapter (6a) verbunden werden kann, wenn die Einheit in Gebrauch ist;
dadurch gekennzeichnet, daß das Zwischenverbindungsmittel (27 bis 29, 105) ferner einen Energieübertragungsweg (105) vorsieht, zum Übertragen von elektrischer Energie von einem Energiezuführungsanschluß (106b/a) von einem der ersten und zweiten Verbindermittel zu einem Energiezuführungsanschluß (106a/b) des anderen von jenen zwei Verbindermitteln;
und daß eine Energiezuführungsschaltungsanordnung (104; D1 bis D3) zwischen dem Energiezuführungsverbinder (8; S-PWERIN, M-PWERIN) und dem Energieübertragungsweg (105) verbunden ist, zum Bereitstellen von elektrischer Energie, die durch den Adapter zugeführt wird, für jenen Weg, so daß dann, wenn die Datenübertragungseinheit in der genannten Reihe mit weiteren derartigen Datenübertragungseinheiten verbunden ist, die elektrische Energie für wenigstens eine von jenen weiteren Datenübertragungseinheiten durch den Adapter und nicht durch die Datenempfangseinheit zugeführt wird.

2. Datenübertragungseinheit nach Anspruch 1, bei der die Energiezuführungsschaltungsanordnung (104; D1 bis D3) ein Rückwärtsstromverhinderungsmittel (104) umfaßt, das zwischen den Energiezuführungsanschlüssen (106a, b) und dem Energiezuführungsverbinder (8) verbunden ist, zum Verhindern, daß ein Rückwärtsstrom von einem der Energiezuführungsanschlüsse (106a, b) zu dem Energiezuführungsverbinder (8) geleitet wird.

3. Datenübertragungseinheit nach Anspruch 1 oder 2, bei der:
der Energieübertragungsweg (105) eine Energiezuführungsleitung umfaßt, die zwischen den Energiezuführungsanschlüssen (106a, 106b) vorgesehen ist; und
die Datenübertragungseinheit (2A; 2B) ferner eine Ladeschaltung (101) umfaßt, zum Laden der beweglichen Terminaleinheit (la), wenn sie mit der Datenübertragungseinheit verbunden ist, eine Kommunikationsschaltung (102), zum Bewirken einer Übertragung von Daten von solch einer verbundenen beweglichen Terminaleinheit (1a) zu der Datenempfangseinheit (3) über den Datenübertragungsweg der Datenübertragungseinheit und die jeweiligen derartigen Datenübertragungswege von jeglichen dazwischenliegenden weiteren Datenübertragungseinheiten der genannten Reihe, und einen Spannungsregler (103), zum Konvertieren der Spannung auf der Energiezuführungsleitung (105) in eine Spannung, die zum Betreiben der verbundenen beweglichen Terminaleinheit (la) geeignet ist;
welche Ladeschaltung (101), welche Kommunikationsschaltung (102) und welcher Spannungsregler (103) mit der Energiezuführungsleitung (105) verbunden sind.

4. Datenübertragungseinheit nach Anspruch 3, ferner mit einem Schaltmittel (111), das zwischen der Energiezuführungsleitung (105) und dem Spannungsregler (103) verbunden ist und betriebsfähig ist, um zu bewirken, daß ein Energiezuführungsstrom dem Spannungsregler (103) nur dann zugeführt wird, wenn die Datenübertragungseinheit Daten von solch einer verbundenen beweglichen Terminaleinheit (la) zu der Datenempfangseinheit (3) gerade überträgt.

5. Datenübertragungseinheit nach Anspruch 3 oder 4, bei der:
der Energiezuführungsverbinder (8) einen Einzweck-Energieeingangsanschluß (S-PWERIN) umfaßt, zum Empfangen einer kleinen Menge von Energie, die zum Betreiben von nur einer einzelnen solchen Datenübertragungseinheit (2b) ausreicht, und einen Mehrzweck-Energieeingangsanschluß (M-PWERIN), zum Empfangen einer großen Menge von Energie, die zum Betreiben einer Vielzahl von solchen Datenübertragungseinheiten ausreicht;
der Einzweck-Energieeingangsanschluß (S-PWERIN) mit der Kommunikationsschaltung (102) operativ verbunden ist; und
die Energiezuführungsschaltungsanordnung (D1 bis D3) eine erste Rückwärtsstromverhinderungsdiode (D3) umfaßt, die zwischen der Energiezuführungsleitung (105) und dem Einzweck-Energieeingangsanschluß (S-PWERIN) verbunden ist, zum Verhindern, daß ein Rückwärtsstrom von dem Einzweck-Energieeingangsanschluß (S-PWERIN) zu den Energiezuführungsanschlüssen (106a, 106b) fließt, und welcher Mehrzweck-Energieeingangsanschluß (M-PWERIN) über die erste Rückwärtsstromverhinderungsdiode (D3) mit der Kommunikationsschaltung (102) verbunden ist, zum Zulassen, daß ein Vorwärtsstrom von dem Mehrzweck-Energieeingangsanschluß zu der Kommunikationsschaltung fließt.

6. Datenübertragungseinheit nach Anspruch 5, bei der die Energiezuführungsschaltungsanordnung (D1 bis D3) ferner eine zweite Rückwärtsstromverhinderungsdiode (D1) umfaßt, die zwischen dem Mehrzweck-Energieeingangsanschluß (M-PWERIN) und der Energiezuführungsleitung (105) verbunden ist, zum Verhindern, daß ein Rückwärtsstrom von der Energiezuführungsleitung (105) zu dem Mehrzweck-Energieeingangsanschluß (M-PWERIN) fließt, und eine dritte Rückwärtsstromverhinderungsdiode (D2), die seriell mit der ersten Rückwärtsstromverhinderungsdiode (D3) zwischen dem Einzweck-Energieeingangsanschluß (S-PWERIN) und der Energiezuführungsleitung (105) verbunden ist, zum Verhindern, daß ein Rückwärtsstrom von der Energiezuführungsleitung (105) zu dem Einzweck-Energieeingangsanschluß (S-PWERIN) fließt.

7. Datenübertragungseinheit nach irgendeinem vorhergehenden Anspruch, bei der die bewegliche Terminaleinheit (la) ein Taschencomputer ist und die Datenübertragungseinheit eine Kommunikationsschnittstelleneinheit (2a) ist.

8. Datenübertragungseinheit nach irgendeinem vorhergehenden Anspruch, bei der die ersten und zweiten Verbindermittel dafür ausgelegt sind, um durch Verbinderkabel mit der vorhergehenden Einheit oder mit der folgenden Einheit der genannten Reihe verbunden zu werden, je nach Bedarf.

9. Datenübertragungseinheit nach irgendeinem der Ansprüche 1 bis 7, bei der die ersten und zweiten Verbindermittel (7) dafür ausgelegt sind, um mit der vorhergehenden Einheit oder der folgenden Einheit der genannten Reihe direkt verbunden zu werden, je nach Bedarf.

10. Datenübertragungseinheit nach Anspruch 9, mit jeweiligen Seitenoberflächen, die einander gegenüberliegen, wobei eines der ersten und zweiten Verbindermittel (7) einen Verbinder (7-1) umfaßt, der aus einer der Seitenoberflächen herausragt, und das andere von jenen zwei Verbindermitteln einen Verbinder (7-2) umfaßt, der in die andere der Seitenoberflächen versenkt ist;
welcher herausragende Verbinder (7-1) der betreffenden Datenübertragungseinheit dafür ausgelegt ist, um mit solch einem versenkten Verbinder (7-2) der vorhergehenden Datenübertragungseinheit von der genannten Reihe direkt gekoppelt zu werden, und welcher versenkte Verbinder (7-2) der betreffenden Datenübertragungseinheit dafür ausgelegt ist, um mit solch einem herausragenden Verbinder (7-1) der folgenden Übertragungseinheit von der genannten Reihe direkt gekoppelt zu werden.

11. Datenübertragungseinheit nach Anspruch 10, mit wenigstens einer Kopplungsplatte (25a, 25b), die auf einer Bodenoberfläche (23) der Datenübertragungseinheit vorgesehen ist, welche Kopplungsplatte (25b) dazu dient, die Kopplung zwischen der betreffenden Datenübertragungseinheit (2A-1) und der vorhergehenden Datenübertragungseinheit oder der folgenden Datenübertragungseinheit (2A-2) von der genannten Reihe zu befestigen.

12. Vorrichtung mit:
einer Datenempfangseinheit (3); und
einer Vielzahl von Datenübertragungseinheiten, von denen jede eine Datenübertragungseinheit nach irgendeinem vorhergehenden Anspruch ist, die seriell miteinander verbunden sind, so daß das zweite Verbindermittel (13b) der letzten Datenübertragungseinheit von der genannten Reihe mit der Datenempfangseinheit (3) verbunden ist und das erste Verbindermittel (7-3; 13b) von jeder Datenübertragungseinheit mit dem zweiten Verbindermittel (7-2; 13a) der vorhergehenden Datenübertragungseinheit, falls vorhanden, von der genannten Reihe verbunden ist, wodurch der Energiezuführungsanschluß (106b) des betreffenden ersten Verbindermittels (13b) mit dem Energiezuführungsanschluß (106a) des betreffenden zweiten Verbindermittels (13b) verbunden ist, um die Zufuhr von elektrischer Energie zwischen den betreffenden zwei Datenübertragungseinheiten zuzulassen, so daß dann, wenn solch ein Energiezuführungsadapter mit einer der Datenübertragungseinheiten von der genannten Reihe verbunden ist, die elektrische Energie für wenigstens eine der anderen Datenübertragungseinheiten von der Reihe durch den Adapter und nicht durch die Datenempfangseinheit zugeführt wird.

13. Vorrichtung nach Anspruch 12, bei der dann, wenn solch ein Energiezuführungsadapter (6a) mit einer der Datenübertragungseinheiten von der genannten Reihe verbunden ist, die elektrische Energie für jede der anderen Datenübertragungseinheiten von der genannten Reihe durch den Adapter zugeführt wird.

14. Vorrichtung nach Anspruch 12, bei der jede Datenübertragungseinheit eine Datenübertragungseinheit nach Anspruch 4 ist und, wenn solch ein Energiezuführungsadapter (6a) mit einer der Datenübertragungseinheiten von der genannten Reihe verbunden ist, die elektrische Energie, die durch den Adapter zugeführt wird, verwendet wird, um gerade jene eine der Datenübertragungseinheiten von der genannten Reihe zu betreiben, die zu jener Zeit Daten von ihrer verbundenen beweglichen Terminaleinheit zu der Datenempfangseinheit überträgt.

15. Vorrichtung nach irgendeinem der Ansprüche 12 bis 14, bei der die Verbindung von dem ersten Verbindermittel (7-3) von jeder Datenübertragungseinheit (2A-2) zu dem zweiten Verbindermittel (7-2) der vorhergehenden Datenübertragungseinheit (2A-1) von der genannten Reihe eine direkte Verbindung ist, die kein Verbinderkabel enthält.

16. Vorrichtung nach Anspruch 15, bei der jede Datenübertragungseinheit eine Datenübertragungseinheit nach Anspruch 11 ist und die Verbindung von der letzten Datenübertragungseinheit von der genannten Reihe zu der Datenempfangseinheit (3) durch ein Verbinderkabel erfolgt.

17. Vorrichtung nach irgendeinem der Ansprüche 12 bis 14, bei der die Verbindung von dem ersten Verbindermittel (13b) von jeder Datenübertragungseinheit zu dem zweiten Verbindermittel (13a) der vorhergehenden Datenübertragungseinheit der Reihe durch ein Verbinderkabel erfolgt.

18. Vorrichtung nach irgendeinem der Ansprüche 12 bis 14, bei der die bewegliche Terminaleinheit (la) ein Taschencomputer ist, jede genannte Datenübertragungseinheit eine Kommunikationsschnittstelleneinheit (2a) ist und die Datenempfangseinheit (3) ein Hostcomputer ist.

## Revendications

1. Module d'émission de données, pour connexion à un module terminal mobile (1a-2) pour permettre le transfert, de données mémorisées dans le module terminal mobile, du module terminal mobile à un module (3) de réception de données, lequel module (2A-2 ; 2B) d'émission de données est conçu pour être connecté en série avec au moins un module (2A-1) d'émission de données supplémentaire et il comprend :
des premier et second moyens connecteurs (13a, 13b ; 7), le premier moyen connecteur (7-4 ; 13b) servant à permettre au module d'émission de données de se connecter à un même module (2A-1) d'émission de données supplémentaire, s'il y en a un, qui précède le module (2A-2) d'émission de données en question dans ladite série, et le second moyen connecteur (7-3 ; 13a) servant à permettre de connecter le module (2A-2) d'émission de données en question à un même module d'émission de données supplémentaire, s'il y en a un, qui suit le module (2A-2) d'émission de données en question dans ladite série, ou audit module (3) de réception de données ;
des moyens d'interconnexion (27 à 29, 105) connectés auxdits premier et second moyens connecteurs (7-3, 7-4 ; 13b, 13a) destinés à créer un trajet de transfert de données, pour transférer des données de broches de données (b, c) dudit premier moyen connecteur (7-3 ; 13b) à des broches de données (b, c) dudit second moyen connecteur (7-4 ; 13a) ; et
un connecteur d'alimentation (8, S-PWERIN, M-PWERIN), distinct desdits premier et second moyens connecteurs (7-3, 7-4 ; 13a, 13b), auquel on peut connecter un adaptateur d'alimentation (6a) lorsque le module est en utilisation ;
caractérisé en ce que lesdits moyens d'interconnexion (27 à 29, 105) procurent en outre un trajet (105) de transfert d'énergie destiné à transférer de l'énergie électrique depuis une broche d'alimentation (106b/a) de l'un desdits premier et second moyens connecteurs à une broche d'alimentation (106a/b) de l'autre de ces deux moyens connecteurs ;
et en ce que des circuits d'alimentation (104 ; D1 à D3) sont connectés entre ledit connecteur d'alimentation (8, S-PWERIN, M-PWERIN) et ledit trajet (105) de transfert d'énergie pour délivrer, à ce trajet, l'énergie électrique fournie par l'adaptateur, de sorte que lorsque le module d'émission de données est connecté dans ladite série avec de tels modules d'émission de données supplémentaires, l'énergie électrique pour au moins l'un de ces modules d'émission de données supplémentaires est délivrée par l'adaptateur et non par ledit module de réception de données.

2. Module d'émission de données selon la revendication 1, dans lequel lesdits circuits d'alimentation (104 ; D1 à D3) comprennent un moyen (104) de prévention de courant inverse connecté entre lesdites broches d'alimentation (106a, b) et ledit connecteur d'alimentation (8), pour empêcher le passage d'un courant inverse depuis l'une desdites broches d'alimentation (106a, b) vers ledit connecteur d'alimentation (8).

3. Module d'émission de données selon la revendication 1 ou 2, dans lequel :
ledit trajet (105) de transfert d'énergie comprend une ligne d'alimentation disposée entre lesdites broches d'alimentation (106a, 106b) ; et
le module (2A ; 2B) d'émission de données comprend en outre un circuit de charge (101) destiné à charger le module terminal mobile (la) lorsqu'il est connecté au module d'émission de données, un circuit de transmission (102) destiné à effectuer le transfert de données depuis un tel module terminal mobile (la) connecté, audit module (3) de réception de données, par l'intermédiaire dudit trajet de données du module d'émission de données et des trajets de transfert de données respectifs des modules d'émission de données supplémentaires intermédiaires de ladite série, et un régulateur de tension (103) destiné à convertir la tension au niveau de ladite ligne d'alimentation (105) en une tension appropriée pour alimenter ledit module terminal mobile (1a) connecté ;
ledit circuit de charge (101), ledit circuit de transmission (102), et ledit régulateur de tension (103) étant connectés à ladite ligne d'alimentation (105).

4. Module d'émission de données selon la revendication 3, comprenant en outre, un moyen de commutation (111) connecté entre ladite ligne d'alimentation (105) et ledit régulateur de tension (103) et utilisable pour provoquer la délivrance d'un courant d'alimentation audit régulateur de tension (103) seulement lorsque ledit module d'émission de données est en train de transférer des données, depuis un tel module terminal mobile (la) connecté vers ledit module (3) de réception de données.

5. Module d'émission de données selon la revendication 3 ou 4,
dans lequel ledit connecteur d'alimentation (8) comprend une borne d'entrée d'énergie à usage unique (S-PWERIN) destinée à recevoir une petite quantité d'énergie suffisante pour alimenter seulement un unique module (2b) d'émission de données, et une borne d'entrée d'énergie à usage multiple (M-PWERIN) destinée à recevoir une grande quantité d'énergie suffisante pour alimenter plusieurs de ces modules d'émission de données ;
dans lequel ladite borne d'entrée d'énergie à usage unique (S-PWERIN) est connectée fonctionnellement audit circuit de transmission (102) ; et
dans lequel lesdits circuits d'alimentation (D1 à D3) comprennent une première diode (D3) de protection contre le courant inverse, connectée entre ladite ligne d'alimentation (105) et ladite borne d'entrée d'énergie à usage unique (S-PWERIN), pour empêcher le passage d'un courant inverse depuis ladite borne d'entrée d'énergie à usage unique (S-PWERIN) vers lesdites broches d'alimentation (106a, 106b), et ladite borne d'entrée d'énergie à usage multiple (M-PWERIN) étant connectée, via ladite première diode (D3) de protection contre le courant inverse, audit circuit de transmission (102) pour permettre le passage d'un courant direct depuis ladite borne d'entrée d'énergie à usage multiple vers ledit circuit de transmission.

6. Module d'émission de données selon la revendication 5, dans lequel lesdits circuits d'alimentation (D1 à D3) comprennent en outre une deuxième diode (D1) de protection contre le courant inverse, connectée entre ladite borne d'entrée d'énergie à usage multiple (M-PWERIN) et ladite ligne d'alimentation (105) pour empêcher le passage d'un courant inverse depuis ladite ligne d'alimentation (105) vers ladite borne d'entrée d'énergie à usage multiple (M-PWERIN), et une troisième diode (D2) de protection contre le courant inverse connectée, en série avec ladite première diode (D3) de protection contre le courant inverse, entre ladite borne d'entrée d'énergie à usage unique (S-PWERIN) et ladite ligne d'alimentation (105), pour empêcher l'écoulement d'un courant inverse depuis ladite ligne d'alimentation (105) vers ladite borne d'entrée d'énergie à usage unique (S-PWERIN).

7. Module d'émission de données selon l'une quelconque des revendications précédentes, dans lequel ledit module terminal mobile (la) est un ordinateur de poche, et ledit module d'émission de données est un module (2a) d'interface de transmission.

8. Module d'émission de données selon l'une quelconque des revendications précédentes, dans lequel lesdits premier et second moyens connecteurs sont conçus pour être connectés par des câbles de connexion audit module précédent, ou audit module suivant, de ladite série, selon le cas.

9. Module d'émission de données selon l'une quelconque des revendications 1 à 7, dans lequel lesdits premier et second moyens connecteurs (7) sont conçus pour être connectés directement audit module précédent, ou audit module suivant, de ladite série, selon le cas.

10. Module d'émission de données selon la revendication 9, comportant des faces latérales respectives opposées l'une à l'autre, l'un desdits premier et second moyens connecteurs (7) comprenant un connecteur mâle (7-1) qui fait saillie de l'une desdites faces latérales et l'autre de ces deux moyens connecteurs comprenant un connecteur femelle (7-2) qui est en creux dans l'autre desdites faces latérales,
le connecteur mâle (7-1) du module d'émission de données en question étant conçu pour être accouplé directement à un tel connecteur femelle (7-2) dudit module d'émission de données précédent de ladite série, et le connecteur femelle (7-2) dudit module d'émission de données en question étant conçu pour être accouplé directement à un tel connecteur mâle (7-1) dudit module d'émission suivant de ladite série.

11. Module d'émission de données selon la revendication 10, comprenant au moins une plaque d'accouplement (25a, 25b) disposée sur une face inférieure (23) du module d'émission de données, laquelle plaque d'accouplement (25b) sert à assurer l'accouplement entre ledit module (2A-1) d'émission de données en question et ledit module d'émission de données précédent, ou ledit module (2A-2) d'émission de données suivant, de ladite série.

12. Appareil comprenant :
un module (3) de réception de données ; et
plusieurs modules d'émission de données, chacun étant un module d'émission de données selon l'une quelconque des revendications précédentes, connectés en série les uns aux autres de façon que ledit second moyen connecteur (13b) du dernier module d'émission de données de ladite série soit connecté audit module (3) de réception de données, et de façon que ledit premier moyen connecteur (7-3 ; 13b) de chaque module d'émission de données soit connecté audit second moyen connecteur (7-2 ; 13a) du module d'émission de données précédent, s'il y en a un, de ladite série, en connectant ainsi ladite broche d'alimentation (106b) du premier moyen connecteur (13b) concerné à ladite broche d'alimentation (106a) du second moyen connecteur (13b) concerné, pour permettre la délivrance d'énergie électrique entre lesdits modules d'émission de données concernés de façon que, lorsqu'un tel adaptateur d'alimentation est connecté à l'un des modules d'émission de données de ladite série, l'énergie électrique pour au moins l'un des autres modules d'émission de données de la série est délivrée par l'adaptateur et non par le module de réception de données.

13. Appareil selon la revendication 12, dans lequel, lorsqu'un adaptateur d'alimentation (6a) est connecté à l'un desdits modules d'émission de données de ladite série, l'énergie électrique pour chacun des autres modules d'émission de données de ladite série est fournie par l'adaptateur.

14. Appareil selon la revendication 12, dans lequel chaque module d'émission de données est un module d'émission de données selon la revendication 4 et, lorsqu'un adaptateur d'alimentation (6a) est connecté à l'un desdits modules d'émission de données de ladite série, ladite énergie électrique délivrée à l'adaptateur est utilisée pour alimenter seulement celui des modules d'émission de données de ladite série qui est à ce moment en cours de transfert de données de son dit module terminal mobile connecté, audit module de réception de données.

15. Appareil selon l'une quelconque des revendications 12 à 14, dans lequel la connexion dudit premier moyen connecteur (7-3) de chaque module (2A-2) d'émission de données au second moyen connecteur (7-2) du module (2A-1) d'émission de données précédent de ladite série est une connexion directe qui n'implique pas de câble de connexion.

16. Appareil selon la revendication 15, dans lequel chaque module d'émission de données est un module d'émission de données selon la revendication 11, et dans lequel la connexion dudit dernier module d'émission de données de ladite série audit module (3) de réception de données se fait au moyen d'un câble de connexion.

17. Appareil selon l'une quelconque des revendications 12 à 14, dans lequel la connexion dudit premier moyen connecteur (13b) de chaque module d'émission de données audit second moyen connecteur (13a) du module d'émission de données précédent de la série se fait au moyen d'un câble de connexion.

18. Appareil selon l'une quelconque des revendications 12 à 17, dans lequel ledit module terminal mobile (la) est un ordinateur de poche, chacun desdits modules d'émission de données est un module (2a) d'interface de transmission, et ledit module (3) de réception de données est un ordinateur hôte.
